# EUROPÄISCHE PATENTSCHRIFT

(11) **EP 3 067 009 B1**
(45) Veröffentlichungstag und Bekanntmachung des Hinweises auf die Patenterteilung: **18.04.2018**
(21) Anmeldenummer: 16157528.7
(22) Anmeldetag: 26.02.2016
(51) Int. Cl.: A61C 8/00

(54) **LABORANALOG ZUM EINSETZEN IN EINE KAVITÄT EINES PRINTMODELLS**
LABORATORY ANALOGUE FOR INSERTION INTO A CAVITY OF A PRINT MODEL
RÉPLIQUE POUR L'INSERTION DANS UNE CAVITÉ D'UN MODÈLE D'IMPRESSION

(30) Priorität: 09.03.2015 EP 15158227
(43) Veröffentlichungstag der Anmeldung: 14.09.2016
(73) Patentinhaber: Medentika GmbH, 76549 Hügelsheim (DE)
(72) Erfinder: Fix, Frank, 75196 Remchingen (DE)
(74) Vertreter: Durm Patentanwälte PartG mbB

(56) Entgegenhaltungen:
- WO-A2-03/077789
- US-A1- 2015 045 925

## Beschreibung

Die vorliegende Erfindung betrifft ein Laboranalog zum Einsetzen in eine Kavität eines Printmodells und zur Aufnahme eines Abutments.

Derartige Laboranaloge werden beispielsweise bei der Modellierung von künstlichen Zahnaufbauten verwendet, die mithilfe von Implantaten im Kiefer eines Patienten befestigt werden.

Es ist bekannt, Gebisse mithilfe von digitalen Scannern dreidimensional zu erfassen. Aus den daraus gewonnenen Datensätzen werden mittels 3D-Druckern sogenannte Printmodelle (Gebissmodelle) erstellt. Soll ein implantatgestützter künstlicher Zahnaufbau für einen Patienten individuell gefertigt werden, so wird ein "Scanbody" in ein im Kiefer des Patienten verankertes Implantat eingeschraubt. Der Scanbody ist beispielsweise als Pfosten mit einer oder mehreren Flächen ausgebildet und wird beim Scannen des Gebisses erkannt. Er gibt die genaue Ausrichtung des Implantats wieder und dient damit zur späteren exakten Positionierung eines Abutments im (auf dem) Printmodell. Der künstliche Zahn wird dann auf das Abutment im Printmodell aufmodelliert und später gemeinsam mit dem Abutment in das Implantat im Patientenkiefer geschraubt.

Um das Abutment mit dem Printmodell verbinden zu können, werden Laboranaloge im Printmodell vorgesehen, die wie das reale Implantat im Kiefer des Patienten entsprechende Aufnahmen für die gewählten Abutments aufweise. Um das Laboranalog im Printmodell verankern zu können, wird eine Kavität vorgesehen, in die das Laboranalog später eingesetzt wird. Die Kavität wird im digitalen Datensatz hinterlegt und beim Drucken des Printmodells direkt generiert. Die Ausgestaltung der Kavität und ihre Position werden in Abhängigkeit des Scanbodys und der Form des entsprechenden Laboranalogs gewählt.

Aufgrund von Fertigungstoleranzen bei der Erstellung des Printmodells sowie Toleranzen bei der Erstellung der Abutments ist eine exakte Positionierung des Abutments im Printmodell nur schwer möglich. Eine Modellierung des künstlichen Zahns auf dem Abutment, so dass sich dieser später nahtlos in das Gebiss des Patienten einfügt, ist dadurch nur schwer möglich. US 2005/0045925 A1 offenbart ein Laboranalog gemäß dem einleitenden Teil des unabhängigen Patentanspruchs 1.

Angesichts der beschriebenen Problematik ist es Aufgabe der vorliegenden Erfindung, ein verbessertes Laboranalog zum Einsetzen in eine Kavität eines Printmodells, ein Printmodell mit einer entsprechenden Kavität und das daraus resultierende System umfassend das Laboranalog und das Printmodell bereitzustellen, die eine exakte Positionierung eines Abutments im Printmodell ermöglichen.

Gelöst wird die Aufgabe durch ein Laboranalog mit den Merkmalen des Anspruchs 1 und durch ein System mit den Merkmalen des Anspruchs 12.

Erfindungsgemäß umfasst das Laboranalog einen im Wesentlichen zylindrischen Grundkörper, der sich entlang einer Längsachse erstreckt, einen ersten Zentrierabschnitt und einen zweiten Zentrierabschnitt. Der erste Zentrierabschnitt grenzt in koronaler Richtung an den Grundkörper an, während der zweite Zentrierabschnitt in apikaler Richtung an den Grundkörper angrenzt. Die beiden voneinander beabstandeten Zentrierabschnitte ermöglichen, das Laboranalog exakt in der Kavität des Printmodells zu zentrieren. Insbesondere ein Verkippen des Laboranalogs relativ zur Kavität wird vermieden.

Das Laboranalog umfasst weiter Verspannungselemente zum Verspannen des Laboranalogs in Längsrichtung und wenigstens ein Fixierungselement zur rotatorischen Fixierung des Laboranalogs. Ein Bewegen des Laboranalogs in Längsrichtung wird mithilfe der Verspannungselemente unterbunden. Durch die Fixierungselemente ist das Laboranalog auch in Rotationsrichtung um die Längsachse des Grundkörpers fixiert.

Die beiden Zentrierabschnitte, die Verspannungselemente und das Fixierungselement zusammen fixieren das Laboranalog in der Kavität vollständig, so dass dieses keinerlei Freiheitsgrade mehr aufweist. Ein Bewegen des Laboranalogs in der Kavität wird damit unterbunden.

Erfindungsgemäß weist der erste Zentrierabschnitt eine Zentrierfläche auf. Der zweite Zentrierabschnitt umfasst mindestens ein Zentrierelement. Sowohl die Zentrierfläche wie auch das Zentrierelement weiten die Kavität beim Einsetzen des Laboranalogs radial. Das Weiten erfolgt im elastischen Bereich des Printmodells. Das Material zur Herstellung des Printmodells wurde entsprechend gewählt. Bevorzugt besteht das Printmodell aus Kunststoff, bevorzugt aus thermoplastischen oder lichthärtenden Kunststoffen.

Bevorzugt ist das Zentrierelement als apikale Zentrierfläche ausgebildet, wobei das Laboranalog mindestens eine apikale Zentrierfläche umfasst. Es ist aber auch denkbar, dass das Laboranalog eine Vielzahl von Zentrierflächen umfasst, beispielweise zwei, drei, vier, fünf, sechs, acht, 10, 12 oder mehr als 12. Im Rahmen der vorliegenden Erfindung wurde erkannt, dass mit zunehmender Anzahl an Zentrierflächen die Genauigkeit steigt, mit der das Laboranalog in der Kavität zentriert werden kann. In der Praxis haben sich zwei bis 4 Zentrierflächen als ausreichend erwiesen.

Ein erstes Verspannungselement ist als Wulst und ein zweites Verspannungselement ist als Absatz ausgebildet. Die bevorzugt im apikalen Bereich des Laboranalogs angeordnete Wulst hintergreift bei eingesetztem Laboranalog einen Vorsprung in der Kavität in Einsetzrichtung derart, dass der Absatz an einer Schulter in der Kavität zur Anlage kommt. Durch das Hintergreifen des Vorsprungs wird der Absatz des Laboranalogs in Richtung der Schulter der Kavität gezogen, bis er an der Schulter zur Anlage kommt. Bevorzugt ist die Wulst quer zur Längsrichtung des Grundkörpers angeordnet und verläuft in Umfangsrichtung des Grundkörpers. Sie weist eine in Einsetzrichtung gerundete Mantelfläche auf, die einen im Querschnitt asymmetrischen Verlauf hat. Bevorzugt verläuft die Schnittebene des Querschnitts entlang der Längsachse des Grundkörpers. Die Mantelfläche bildet den Querschnittsrand, der entlang eines koronal angeordneten Bereichs einen kleineren Radius aufweist als entlang eines apikal angeordneten Bereichs. Die Formulierung "entlang eines koronal/apikal angeordneten Bereichs" bedeutet in diesem Zusammenhang, dass der Radius des Querschnittrands, also der Mantelfläche, über den koronal/apikal angeordneten Bereich gleichbleibend, insbesondere konstant ist. Die Mantelfläche reicht im apikalen Bereich quer zur Längsachse bevorzugt näher an die Längsachse heran als im koronalen Bereich.

Um die Wulst beim Einsetzen des Laboranalogs in die Kavität an dem Vorsprung vorbeizubewegen, läuft die Mantelfläche entlang ihres apikalen Bereichs auf den Vorsprung auf, wodurch dieser radial geweitet wird. Nachdem die Wulst den Vorsprung im Bereich ihrer größten radialen Ausdehnung passiert hat, gleitet die Mantelfläche entlang ihres koronalen Bereichs an dem Vorsprung ab, wobei sich der Vorsprung elastisch rückverformt. Durch diese Rückverformung drückt der Vorsprung die Wulst und damit das Laboranalog in die Kavität hinein.

Bevorzugt ist der Vorsprung noch nicht vollständig rückverformt und/oder die Mantelfläche entlang ihres koronalen Bereichs noch nicht vollständig am Vorsprung abgeglitten, wenn der Absatz an der Schulter der Kavität zur Anlage kommt. Dadurch wird das Laboranalog weiter in die Kavität hineingedrückt, jedoch durch die Anlage des Absatzes an der Schulter blockiert. Das Laboranalog ist somit in der Kavität verspannt.

Im Rahmen der vorliegenden Erfindung wurde erkannt, dass durch die Größe des Radius des apikalen Bereichs der Mantelfläche die Einsetzkräfte beim Einsetzen des Laboranalogs in die Kavität beeinflusst werden. Entsprechend bewirkt ein größerer Radius geringere Einsetzkräfte, wohingegen ein kleinerer Radius höhere Einsetzkräfte mit sich bringt. Bevorzugt beträgt der Radius im apikalen Bereich 0,4 mm bis 0,6 mm, besonders bevorzugt 0,5 mm. Es wurde weiter erkannt, dass die Größe des Radius entlang des koronalen Bereichs der Mantelfläche maßgeblich die Ausziehkraft beeinflusst, die beim Herausnehmen des Laboranalogs aus der Kavität überwunden werden muss. Bevorzugt beträgt der Radius entlang des koronalen Bereichs der Mantelfläche 0,2 mm bis 0,4 mm, besonders bevorzugt 0,3 mm.

Bei der Dimensionierung der Wulst wurde insbesondere darauf geachtet, dass der Vorsprung in der Kavität durch seine Verformung nicht beschädigt oder gar zerquetscht wird. Hierzu trägt insbesondere ein annährend gleichbleibender, insbesondere konstanter Radius im apikalen Bereich der Mantelfläche bei, sodass der Vorsprung gleichmäßig geweitet wird. Entsprechendes gilt auch für den koronalen Bereich der Mantelfläche. Bevorzugt wird der Vorsprung beim Einsetzen bzw. Ausziehen des Laboranalogs elastisch verformt, sehr bevorzugt ausschließlich elastisch.

Optional kommt der Absatz derart an der Schulter zur Anlage, dass ein Benutzer beim Einsetzen des Laboranalogs in die Kavität eine akustische und/oder haptische Rückmeldung erhält. Eine derartige akustische Rückmeldung kann beispielsweise ein Klicken sein, dass durch ein vollflächiges Auftreffen des Absatzes auf der Schulter entsteht. So wird sichergestellt, dass das Laboranlog den korrekten Sitz in der Kavität hat.

Das Fixierungselement ist flächig ausgebildet und liegt bei eingesetztem Laboranalog am Printmodell an. Bevorzugt kommt das Fixierungselement an einem entsprechend flächig ausgebildeten Gegenstück in der Kavität zur Anlage. Optional sind das Fixierungselement und sein Gegenstück mit einem Aufmaß hergestellt, sodass die beiden Flächen annähernd vollflächig zur Anlage kommen und dadurch das Laboranalog rotatorisch fixieren. Bevorzugt ist das Fixierungselement als Fixierfläche ausgebildet, wobei das Laboranalog mindestens eine Fixierfläche umfasst. Es ist aber auch denkbar, dass das Laboranalog eine Vielzahl von Fixierflächen umfasst, beispielweise zwei, vier, sechs, acht, 10, 12 oder mehr als 12.

Im Rahmen der vorliegenden Erfindung wird unter dem Begriff Printmodell ein Gebissmodell verstanden, das mithilfe des 3D-Druckverfahrens oder mittels Fräsen hergestellt wurde. Die Begriffe Printmodell und Gebissmodell werden synonym füreinander verwendet.

In einer bevorzugten Ausführungsform weist der Zentrierabschnitt eine Zentrierfase auf, an die in koronaler Richtung die koronale Zentrierfläche angrenzt, wobei der erste Zentrierabschnitt einen im Vergleich zum Grundkörper größeren Durchmesser aufweist. Die Zentrierfase weist bevorzugt einen Winkel zur Längsachse des Grundkörpers im Bereich von 2 bis 89 Grad, bevorzugt von 5 bis 50 Grad, besonders bevorzugt von 10 bis 45 Grad, auf. Die Zentrierfase erleichtert beim Einsetzen des Laboranalogs ein Aufweiten der Kavität auf den Durchmesser des ersten Zentrierabschnitts. Durch die elastische Aufdehnung der Kavität wird das Laboranalog fest vom Printmodell umfasst und absolut lagestabil über Radialdruck fixiert. Optional kommt die Zentrierfläche vollumfänglich an der Kavität zur Anlage.

Weiter bevorzugt ist mindestens eine Wulst am apikalen Ende des zweiten Zentrierabschnitts angeordnet und verläuft zumindest teilweise in Umfangsrichtung des Grundkörpers. Optional ist die Wulst in Einsetzrichtung des Laboranalogs vor dem Absatz angeordnet.

Zweckmäßigerweise ist mindestens ein Absatz am apikalen Ende des Grundkörpers angeordnet. Bevorzugt sind die Mantelfläche der Wulst, an der die Wulst den Vorsprung in der Kavität hintergreift, und eine Absatzfläche, mit der der Absatz an der Schulter zur Anlage kommt, in Einsetzrichtung des Laboranalogs einander zugewandt angeordnet.

Optional weist das Laboranalog zwei einander gegenüberliegende oder drei in Umfangsrichtung des Grundkörpers angeordnete Zentrierelemente auf, die als apikale Zentrierflächen ausgebildet sind. Durch zwei einander gegenüberliegende oder drei in Umfangsrichtung angeordnete Zentrierelemente ist gewährleistet, dass das Laboranalog einen in Umfangsrichtung gleichbleibenden Abstand zur Innenwandung der Kavität aufweist. Das Laboranalog wird im Bereich des unteren Zentrierabschnitts mittig in der Kavität des Printmodells zentriert. Bevorzugt sind die drei Zentrierelemente gleichmäßig angeordnet, d.h. in gleichen Winkelabständen in Umfangsrichtung.

Weiter bevorzugt weist das Laboranalog vier Verspannungselemente auf, wobei zwei Verspannungselemente als Wülste und zwei Verspannungselemente als Absätze ausgebildet sind. Die Wülste und die Absätze sind jeweils einander gegenüberliegend angeordnet. Dadurch entsteht eine gleichmäßige Verspannung des Laboranalogs in der Kavität. Bevorzugt wird das Laboranalog konzentrisch zur Kavität verspannt.

In einer weiteren Ausführungsform sind die Absätze und Wülste in Umfangsrichtung des Grundkörpers um 90 Grad zueinander versetzt angeordnet. Dadurch wird ein möglichst einfaches Einsetzen des Laboranalogs in die Kavität ermöglicht. Die Wülste müssen nur an den korrespondierenden Vorsprüngen vorbeigeführt werden. Sie kommen nicht mit den Schultern, an denen die Absätze zur Anlage kommen, in Berührung. Bevorzugt entspricht die radiale Ausdehnung der Wulst quer zur Längsrichtung des Grundkörpers in etwa dem Radius des Grundkörpers.

Weiter bevorzugt weist das Laboranalog sechs Verspannungselemente auf, wobei drei Verspannungselemente als Wulst und drei Verspannungselemente als Absatz ausgebildet sind. Die Wülste und die Absätze sind bevorzugt jeweils gleichmäßig in Umfangsrichtung des Grundkörpers verteilt angeordnet. Je höher die Anzahl der Verspannungselemente ist, desto gleichmäßiger wird das Laboranalog in Längsrichtung in der Kavität fixiert.

Optional sind die apikalen Zentrierflächen als Mantelflächen der Wülste ausgebildet. Dadurch werden zwei Funktionen bewirkt, nämlich die Zentrierfunktion des unteren Zentrierabschnitts und das Hintergreifen eines Vorsprungs in der Kavität von ein und demselben Bauelement, nämlich der Wulst. Somit kann Material und Bauraum eingespart werden. Es versteht sich, dass in diesem Fall die Anzahl der Zentrierflächen der Anzahl an Wülsten entspricht.

Weiter bevorzugt weisen die Fixierungselemente zwei zueinander parallele oder drei in Umfangsrichtung des Grundkörpers angeordnete Fixierflächen auf, die jeweils parallel zur Längsachse des Grundkörpers angeordnet sind und die Wülste umfangseitig (in Umfangsrichtung) begrenzen. Optional verlaufen die Fixierflächen bis zum apikalen Ende des zweiten Zentrierabschnitts. In koronaler Richtung wird der Verlauf der Fixierflächen durch die Absätze begrenzt. Bevorzugt entspricht die Anzahl der Fixierflächen der Anzahl an Wülsten. Optional weisen die Fixierflächen ein Aufmaß auf, so dass sie an ihren entsprechenden Gegenstücken in der Kavität des Printmodells möglichst vollflächig anliegen. Bevorzugt wird zwischen den Fixierflächen und ihren Gegenstücken eine Presspassung gebildet.

Die gestellte Aufgabe wird auch durch ein erfindungsgemäßes System gelöst, das ein Printmodell mit Kavität und ein korrespondierendes Laboranalog umfasst. Das System ermöglicht eine sehr präzise Positionierung des Laboranalogs in der Kavität mit einem vernachlässigbaren Spiel, jedenfalls mit derart kleinen Toleranzen, dass sie in der praktischen Anwendung keine Rolle spielen und bei der späteren Installation des Abutments im Mund zu keinen spürbaren oder nachteiligen Abweichungen führen. Dadurch kann ein Abutment, das optional in das Laboranalog eingeschraubt werden kann, im Printmodell exakt positioniert werden. Die Position des Abutments im Printmodell und im realen Gebiss des Patienten stimmen annähernd exakt überein. Somit ist gewährleistet, dass sich der mithilfe des Printmodells auf dem Abutment aufgebaute künstlichen Zahn später nahtlos, d.h. passend und ohne spürbare Abweichung, in das Gebiss des Patienten einfügt.

Teil des erfindungsgemäßen Systems ist auch ein Printmodell mit einer im Wesentlichen als Bohrung ausgebildeten Kavität zur Aufnahme eines Laboranalogs, wobei die Bohrung eine Innenwandung umfasst. Die Innenwandung weist einen Einführabschnitt zum Einführen des Laboranalogs auf, der sich ausgehend von einer koronalen Öffnung der Bohrung apikal erstreckt. Im Einführabschnitt ist eine radiale Verjüngung zur Zentrierung des Laboranalogs angeordnet. An der radialen Verjüngung kommt bei eingesetztem Laboranalog die koronale Zentrierfläche des ersten Zentrierabschnitts zur Anlage. Das Printmodell ist insbesondere dazu ausgebildet, das oben beschriebene erfindungsgemäße Laboranalog aufzunehmen und bevorzugt sicher zu fixieren.

Die Innenwandung weist weiter eine Schulter zur Begrenzung der Einführtiefe des Laboranalogs auf, die in Längsrichtung der Bohrung an den Einführabschnitt angrenzt. Mindestens eine Anlagefläche zur rotatorischen Fixierung des Laboranalogs erstreckt sich ausgehend von der Schulter apikal in Längsrichtung. Optional entspricht die Anzahl der Anlageflächen der Anzahl an Fixierflächen des Laboranalogs oder einem Vielfachen davon, bevorzugt dem Doppelten. Die Innenwandung bildet weiter einen Vorsprung, der die Bohrung radial verjüngt und von einer Wulst des Laboranalogs in Einführrichtung derart hintergreifbar ist, dass ein Absatz des Laboranalogs an der Schulter zur Anlage kommt.

Der Einführabschnitt, die Schulter, die Anlagefläche und der Vorsprung fixieren ein Laboranalog in der Kavität vollständig, d. h. es weist keinerlei Freiheitsgrade mehr auf.

Im Rahmen der vorliegenden Erfindung werden die Begriffe "einführen" und "einsetzen" synonym füreinander verwendet.

Bevorzugt ist die radiale Verjüngung im Einführabschnitt vollständig umlaufend angeordnet. Dies ermöglicht eine vollumfängliche Anlage der apikalen Zentrierflächen des Laboranalogs an der Verjüngung. Dadurch wird das Laboranalog im Bereich des ersten Zentrierabschnitts bestmöglich zentriert. Selbstverständlich ist auch eine abschnittsweise Anlage der Zentrierflächen in einigen Fällen ausreichend.

In einer bevorzugten Ausführungsform sind vier oder sechs Anlageflächen beispielsweise paarweise parallel zueinander angeordnet und erstrecken sich bis zum Vorsprung. Es können aber auch beispielsweise mehr als sechs Anlageflächen vorgesehen sein. Optional weisen die Anlageflächen ein minimales Aufmaß auf, so dass sie möglichst vollflächig an den Fixierflächen des Laboranalogs zur Anlage kommen. Es ist ebenfalls denkbar, die Anlageflächen in Einsetzrichtung des Laboranalogs konisch verlaufen zu lassen. Dadurch wird ein annährend vollflächiges Anliegen der Fixierflächen des Laboranalogs an den Anlageflächen der Kavität ermöglicht.

Zweckmäßigerweise sind jeweils zwei der Anlageflächen in einer Ebene angeordnet, bevorzugt parallel zur Längsrichtung der Bohrung. Optional sind die Anlageflächen innerhalb einer Ebene derart positioniert, dass sie möglichst nahe an den in Längsrichtung des Laboranalogs verlaufenden Seitenkanten der Fixierflächen zur Anlage kommen. Dies gewährleistet eine sehr präzise rotatorische Fixierung des Laboranalogs in der Kavität.

Zwei Ausführungsbeispiele der Erfindung werden nachstehend anhand der beigefügten Zeichnungen beschrieben. Es zeigen:
- Fig. 1a: ein Laboranalog mit der Schnittlinie A-A in der Seitenansicht;
- Fig. 1b: das Laboranalog entlang der Linie A-A geschnitten;
- Fig. 2: das Laboranalog aus Fig. 1 in einer perspektivischen Ansicht;
- Fig. 3: eine Kavität eines Printmodells im Schnitt;
- Fig. 4a: ein System mit der Schnittlinie B-B in der Draufsicht;
- Fig. 4b: das System entlang der Linie B-B geschnitten;
- Fig. 5a: das System mit abgesetzter Schnittlinie C-C in Seitenansicht;
- Fig. 5b: das System entlang der Schnittlinie C-C geschnitten;
- Fig. 6a: das System mit einer Schnittlinie D-D in Seitenansicht;
- Fig. 6b: das System entlang der Linie D-D geschnitten;
- Fig. 7a: eine Seitenansicht eines Laboranalogs gemäß einer zweiten Ausführungsform mit der Schnittlinie E-E;
- Fig. 7b: ein entlang der Linie E-E geschnittenes Laboranalog gemäß der zweiten Ausführungsform;
- Fig. 8: das Laboranalog gemäß Fig. 7a in einer perspektivischen Darstellung;
- Fig. 9: eine Kavität gemäß einer zweiten Ausführungsform im Schnitt;
- Fig. 10a: ein System gemäß einer zweiten Ausführungsform mit zwei Schnittlinie F-F und G-G in der Draufsicht;
- Fig. 10b: das System gemäß einer zweiten Ausführungsform entlang der Schnittlinie F-F geschnitten;
- Fig. 10c: das System gemäß einer zweiten Ausführungsform entlang der Schnittlinie G-G geschnitten.

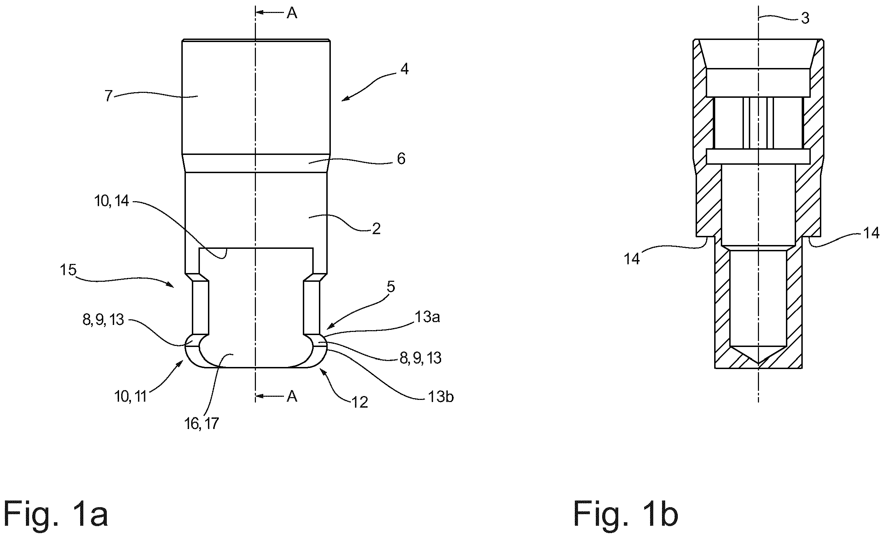

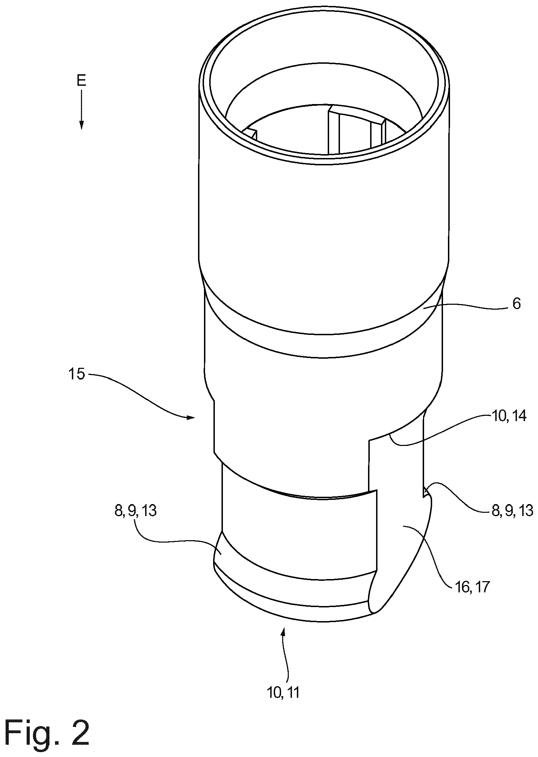

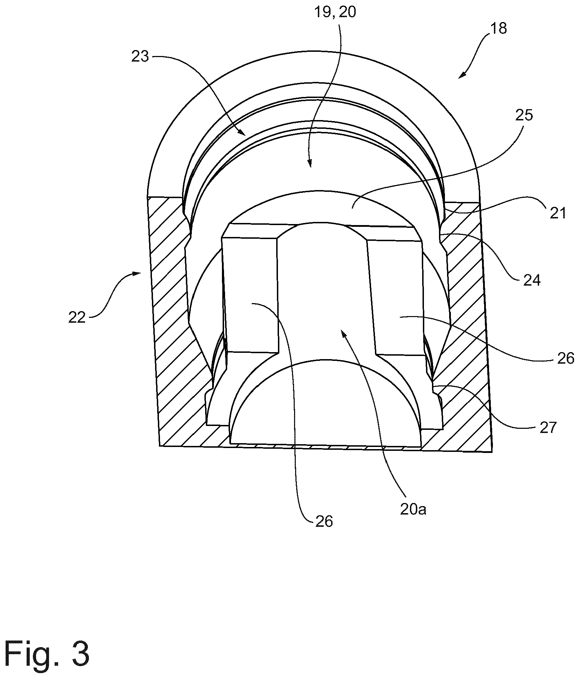

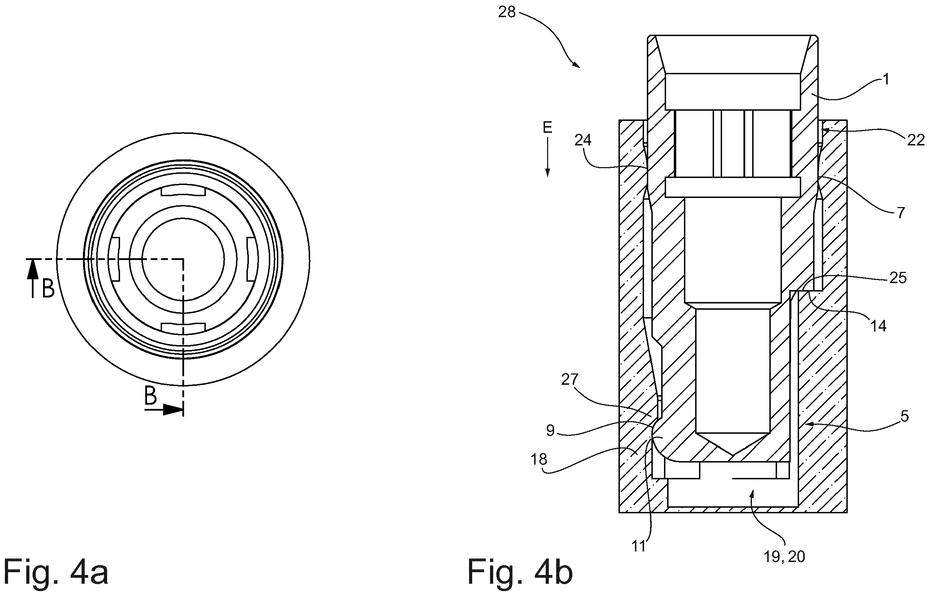

Die Figuren 1a, 1b und 2 zeigen ein Laboranalog 1 zum Einsetzen in eine Kavität eines in Fig. 3 dargestellten Printmodells und zur Aufnahme eines Abutments (nicht dargestellt). Das Laboranalog und das korrespondierende Printmodell bilden gemeinsam ein System, in welchem sie zusammenwirken. Dieses System ist in den Fig. 4 bis 6 dargestellt.

Das Laboranalog 1 umfasst einen im Wesentlichen zylindrischen Grundkörper 2, der sich entlang einer Längsachse erstreckt. An den Grundkörper 2 grenzen in koronaler Richtung ein erster Zentrierabschnitt 4 und in apikaler Richtung ein zweiter Zentrierabschnitt 5 an. Die Zentrierabschnitte 4, 5 dienen dazu, das Laboranalog in der Kavität des Printmodells zu zentrieren.

Der erste Zentrierabschnitt 4 ist im Wesentlichen zylindrisch ausgebildet. Er weist eine Zentrierfase 6 auf, an die in koronaler Richtung eine koronale Zentrierfläche 7 angrenzt. Der erste Zentrierabschnitt 4 hat im Vergleich zum Grundkörper 2 einen größeren Durchmesser.

Der zweite Zentrierabschnitt 5 umfasst zwei einander gegenüberliegende Zentrierelemente 8, die als apikale Zentrierflächen 9 ausgebildet sind. Sowohl die koronale Zentrierfläche 7 wie auch die apikalen Zentrierflächen 9 dienen dazu, die Kavität beim Einsetzen des Laboranalogs 1 radial zu weiten.

Das Laboranalog 1 umfasst weiter vier Verspannungselemente 10 zum Verspannen des Laboranalogs 1 in Längsrichtung. Zwei der Verspannungselemente 10 sind als Wülste 11 ausgebildet, die am apikalen Ende 12 des zweiten Zentrierabschnitts 5 einander gegenüberliegend angeordnet sind. Sie verlaufen zumindest teilweise in Umfangsrichtung des Grundkörpers 2. Die Wülste 11 weisen in Einsetzrichtung des Laboranalogs 1 gerundete Mantelflächen 13 auf, die die apikalen Zentrierflächen 9 bilden. Die Mantelflächen 13 haben einen koronalen Bereich 13a (sogenannte koronale Mantelfläche) und einen apikalen Bereich 13b (sogenannte apikale Mantelfläche), die an die koronale Mantelfläche 13a - bevorzugt nahtlos - angrenzt. Die Radien der koronalen Mantelfläche 13a und der apikalen Mantelfläche 13b unterscheiden sich. Bevorzugt weist die Mantelfläche 13 im apikalen Bereich 13b einen größeren Radius auf als im koronalen Bereich 13a, besonders bevorzugt ist der Radius 1,5 mal so groß, sehr bevorzugt doppelt so groß, weiter bevorzugt 3 mal so groß.

Die übrigen zwei Verspannungselemente 10 sind als Absätze 14 ausgebildet, die am apikalen Ende 15 des Grundkörpers 2 angeordnet sind. Auch die Absätze 14 liegen einander gegenüber. Darüber hinaus sind die Absätze 14 in Umfangsrichtung des Grundkörpers um 90 Grad zu den Wülsten 11 versetzt angeordnet.

Das Laboranalog 1 umfasst weiter zwei Fixierungselemente 16, die flächig ausgebildet sind und bei eingesetztem Laboranalog 1 am Printmodell anliegen. Sie dienen zur rotatorischen Fixierung des Laboranalogs 1 im Printmodell. Die Fixierungselemente 16 weisen zwei zueinander parallele, ebene Fixierflächen 17 auf, die jeweils parallel zur Längsachse 3 des Grundkörpers 2 angeordnet sind und die Wülste 11 umfangseitig begrenzen.

Im Inneren des Laboranalogs 1 ist eine Aufnahme 23 angeordnet. In diese Aufnahme 23 kann ein Abutment, auf das ein künstlicher Zahn aufmodelliert wird, eingesetzt und befestigt werden.

In Figur 3 ist ein Teil eines Printmodells 18 (Gebissmodell) mit einer Kavität 19 im Schnitt dargestellt. Die Kavität 19 ist als Bohrung 20 mit einer Innenwandung 21 ausgebildet. Es versteht sich, dass die Bohrung 20 als Sackbohrung mit oder ohne Öffnung am Boden oder als Durchgangsbohrung ausgebildet sein kann. Zur besseren Darstellung wurde die äußere Begrenzung des Printmodells 18 rund dargestellt. Es versteht sich, dass Fig. 3 lediglich einen Ausschnitt des Printmodells 18 zeigt.

Die Innenwandung 21 bildet einen Einführabschnitt 22 zum Einführen des Laboranalogs 1, der sich ausgehend von einer koronalen Öffnung 23 der Bohrung 20 apikal erstreckt. Der Einführabschnitt 22 weist eine radiale Verjüngung 24 auf, die zur Zentrierung des (korrespondierenden) Laboranalogs 1 dient. Die Verjüngung 24 ist im Einführabschnitt 22 umlaufend angeordnet.

Die Innenwandung 21 bildet weiter eine Schulter 25 zur Begrenzung der Einführtiefe des Laboranalogs. Die Schulter 25 grenzt in Längsrichtung der Bohrung 20 an den Einführabschnitt 22 an. Ausgehend von der Schulter 25 erstreckt sich in apikaler Richtung eine zweite Innenbohrung 20a, die konzentrisch zur Bohrung 20 angeordnet ist und einen im Vergleich zur Bohrung 20 geringeren Durchmesser aufweist.

Die Innenwandung 21 weist vier Anlageflächen 26 zur rotatorischen Fixierung des Laboranalogs 1 auf, die sich ausgehend von der Schulter 25 in apikaler Richtung erstrecken. Die Anlageflächen 26 sind parallel zueinander angeordnet, wobei jeweils zwei der Anlageflächen 26 in einer Ebene liegen, die parallel zur Längsrichtung der Bohrung verläuft. Die Anlageflächen 26 werden in ihrer Breite (quer zur Längsrichtung der Bohrung 20) von der Innenbohrung 20a begrenzt. Die Größe der Breite ist durch den Durchmesser der Innenbohrung 20a bestimmt; sie hängt also vom Radius der Innenbohrung 20a ab.

Es versteht sich, dass bei entsprechend kleinem Radius der Innenbohrung 20a die Breite der beiden Anlageflächen 26 so groß sein kann, dass die beiden Anlageflächen 26 aneinanderstoßen und sich zu einer einzigen Fläche vereinen. Im Rahmen der Erfindung wurde erkannt, dass die Reibung beim Einsetzen des Laboranalogs 1 in die Kavität 19 maßgeblich von der Größe der einzelnen Anlageflächen 26, insbesondere von deren Breite, bestimmt wird. Weist die Innenwandung 21 also beispielsweise vier Anlageflächen 26 auf, dann ist die Reibung beim Einsetzen des Laboranalogs 1 geringer als wenn jeweils zwei der Anlageflächen 26 zu einer Gesamtanlagefläche verschmolzen wurden und somit entsprechend breiter sind. Es hat sich als vorteilhaft erwiesen, wenn der Abstand zwischen den beiden Anlageflächen 26 in einer Ebene dem 1,5 fachen, bevorzugt dem Doppelten der Breite einer Anlagefläche 26 entspricht.

Aufgrund der Schnittdarstellung in Fig. 3 sind lediglich zwei der vier Anlageflächen 26 zu erkennen. Die Bohrung 20 ist symmetrisch zur Schnittebene ausgebildet.

Zwei Vorsprünge 27 der Innenwandung 21 verjüngen die Bohrung 20 radial. Sie sind sowohl in Umfangsrichtung sowie in radialer Richtung der Bohrung 20 jeweils bogenförmig ausgebildet, wobei die Bogen jeweils bevorzugt in Umfangsrichtung dem umfangsseitigen Verlauf der Wülste 11 und in radialer Richtung dem Verlauf der Mantelflächen 13 der Wülste 11 nachempfunden sind. Die Vorsprünge 27 sind von einer Wulst 11 des Laboranalogs 1 in Einführrichtung derart hintergreifbar, dass ein Absatz 14 des Laboranalogs 1 an der Schulter 25 zur Anlage kommt. Aufgrund der bogenförmigen Ausbildung der Vorsprünge 27 kommen die apikalen Zentrierflächen 9 des zweiten Zentrierabschnitts 5 annähernd vollflächig an den Vorsprüngen 27 zur Anlage.

In den Fig. 4a bis 6b ist ein System 28 dargestellt, das das Laboranalog 1 aus Fig. 1a bis 3 und einen Teil des Printmodells 18 aus Fig. 3 mit der Bohrung 20 umfasst. Das Laboranalog 1 ist in die Bohrung 20 eingesetzt.

Es ist zu erkennen, dass der erste Zentrierabschnitt 4 mit der koronalen Zentrierfläche 7 an der radialen Verjüngung 24 im Einführabschnitt 22 der Bohrung 20 anliegt. Dadurch wird das Laboranalog 1 im Bereich des ersten Zentrierabschnitts in der Bohrung 20 zentriert.

Auch im Bereich des zweiten Zentrierabschnitts 5 liegen die apikalen Zentrierflächen 9 an den Vorsprüngen 27 der Innenwandung 21 an und zentrieren dadurch das Laboranalog 1 in der Bohrung 20.

Beim Einsetzen des Laboranalogs 1 in die Bohrung 20 wird diese im Bereich der radialen Verjüngung 24 durch die Zentrierfase 6 und die koronale Zentrierfläche 7 sowie im Bereich der Vorsprünge 27 durch die Wülste 11 radial geweitet.

In Fig. 4b ist weiter zu erkennen, dass die Wulst 11 des eingesetzten Laboranalogs 1 den Vorsprung 27 der Bohrung 20 in Einsetzrichtung E derart hintergreift, dass der Absatz 14 des Laboranalogs 1 an der Schulter 25 der Bohrung 20 zur Anlage kommt. Dadurch wird das Laboranalog 1 in der Bohrung 20 in Längsrichtung verspannt.

Während die Vorsprünge 27 derart mit den Wülste 11 zusammenwirken, das die Wülste 11 und somit das Laboranalog 1 in apikale Richtung (Einsetzrichtung E) gedrückt werden, wird die wirkende Kraft durch die Auflage der Absätze 14 auf den Schultern 25 begrenzt. Dadurch wird eine Bewegung des Laboranalogs 1 in apikale und koronale Richtung verhindert.

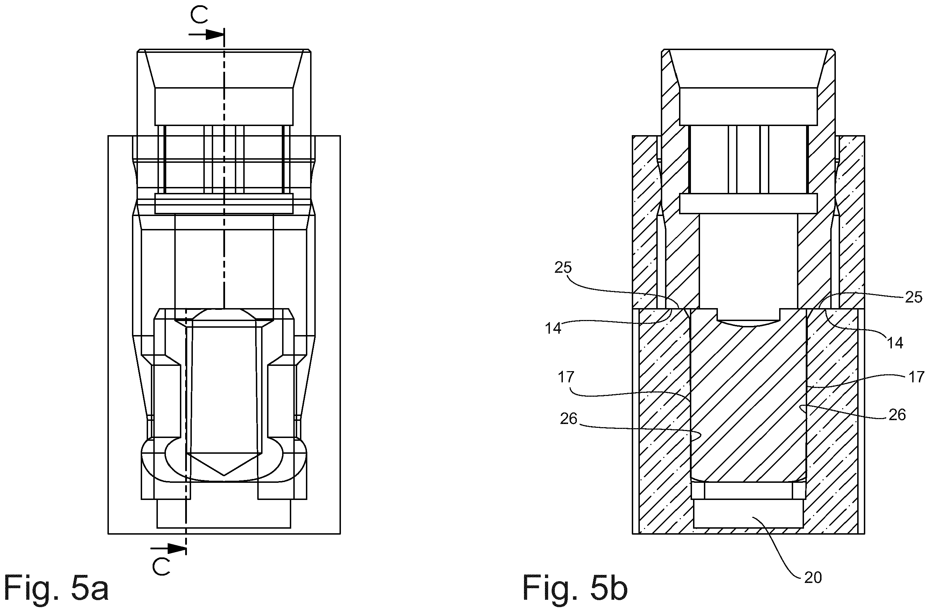

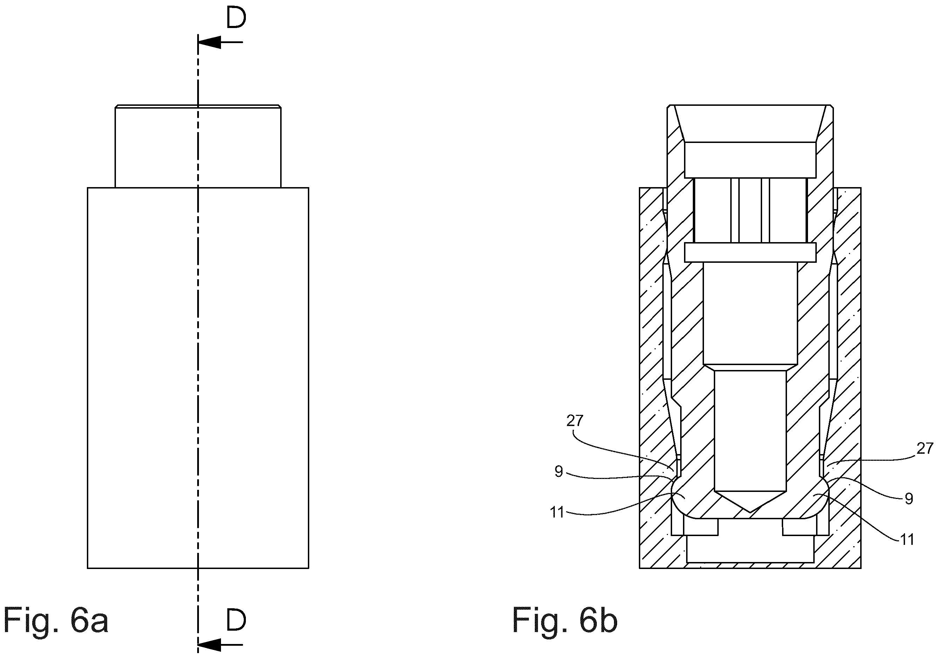

Aufgrund der Schnittführung sind in Fig. 4b die zweite Wulst 11 sowie der zweite Absatz 14 auf den jeweils gegenüberliegenden Seiten nicht dargestellt. Das Hintergreifen zweier Vorsprünge 27 durch die zwei einander gegenüberliegend angeordneten Wülsten 11 ist in Fig. 6b dargestellt. Zwei einander gegenüberliegende Absätze 14, die an der Schulter 25 der Bohrung 20 zur Anlage kommen, sind in Fig. 5b zu erkennen. Die Schnittbilder der Figuren 6b und 5b sind um 90° zueinander gedreht.

Insbesondere Fig. 5b zeigt das Anliegen zweier Fixierflächen 17 des Laboranalogs 1 an zwei Anlageflächen 26 der Bohrung 20. Bevorzugt sind die Anlageflächen 26 in Einsetzrichtung des Laboranalogs 1 konisch angeordnet, so dass sich eine möglichst großflächige Anlage der planen Fixierflächen 17 an den ebenfalls planen Anlageflächen 26 ergibt. Dadurch erfolgt die rotatorische Fixierung des Laboranalogs 1 in der Bohrung 20.

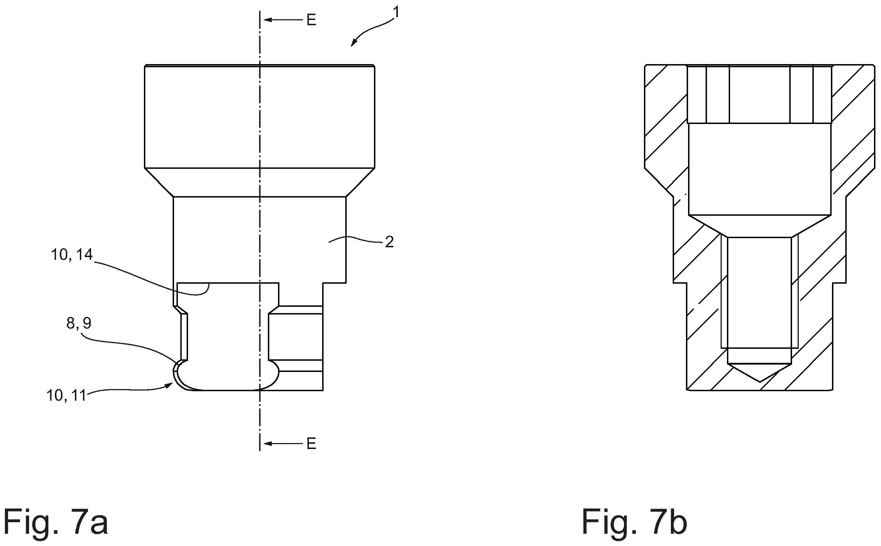

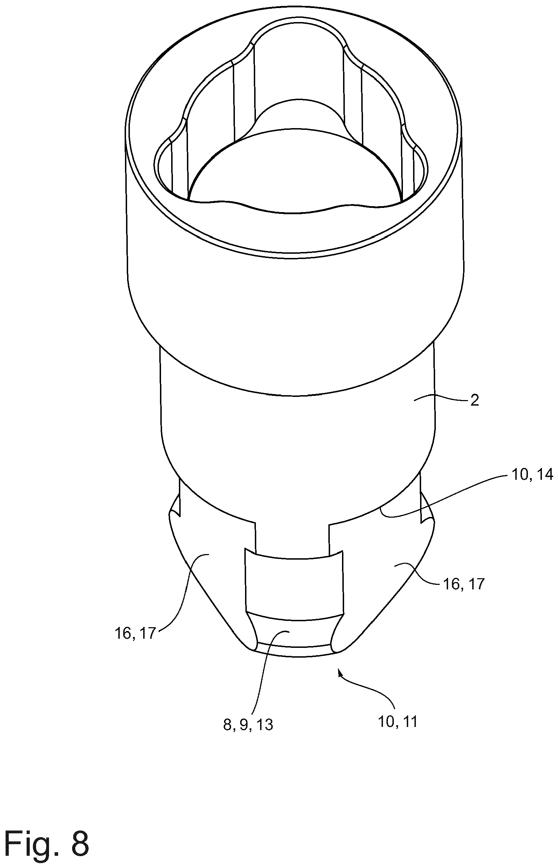

Die Fig. 7a, 7b und 8 zeigen eine zweite Ausführungsform eines Laboranalogs 1. Im Gegensatz zu der bereits beschriebenen Ausführungsform in den Figuren 1a bis 2 weist es drei in Umfangsrichtung des Grundkörpers 2 angeordnete Zentrierelemente 8 auf, die als apikale Zentrierflächen 9 ausgebildet sind.

Weiter unterscheidet es sich durch sechs Verspannungselemente 10, von denen drei als Wülste 11 und drei als Absätze 14 ausgebildet sind. Die Wülste 11 und die Absätze 14 sind jeweils gleichmäßig in Umfangsrichtung des Grundkörpers 2 verteilt angeordnet. Bevorzugt sind die Wülste 11 zu den Absätzen 14 in Umfangsrichtung des Grundkörpers 2 um 60 Grad zueinander versetzt angeordnet.

Ein weiterer Unterschied besteht in den Fixierungselementen 16, die drei in Umfangsrichtung des Grundkörpers 2 angeordnete Fixierflächen 17 aufweisen. Die Fixierflächen 17 sind jeweils parallel zur Längsachse des Grundkörpers 2 angeordnet und begrenzen die Wülste 11 umfangseitig (in Umfangsrichtung). Die Flächennormalen der Fixierflächen 17 weisen einen Winkel von 120 Grad zueinander auf.

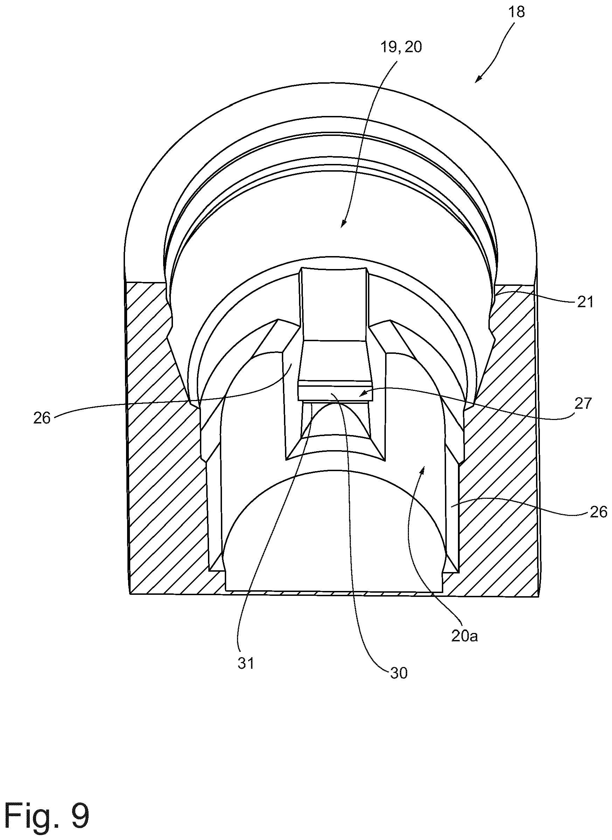

In Fig. 9 ist ein Schnitt einer zweiten Ausführungsform eines Printmodells 18 mit einer Kavität 19 dargestellt. Die Kavität 19 ist als Bohrung 20 mit einer Innenwandung 21 ausgebildet. Zur besseren Darstellung wurde die äußere Begrenzung des Printmodells 18 rund dargestellt. Es versteht sich, dass Fig. 9 lediglich einen Ausschnitt des Printmodells 18 zeigt.

Im Unterschied zu der Ausführungsform gemäß Fig. 3 weist die Bohrung 20 sechs Anlageflächen 26 auf, von denen jeweils zwei in einer Ebene angeordnet sind, bevorzugt parallel zur Längsrichtung der Bohrung 20.

Ein weiterer Unterschied besteht im Vorsprung 27. Dieser weist eine ebene Frontfläche 30 auf, deren Flächennormale bevorzugt senkrecht zur Längsachse der Bohrung 20 ausgerichtet ist. Optional ist die Frontfläche 30 gebogen. Eine Unterseite 31 des Vorsprungs 27 ist in Umfangsrichtung der Bohrung 20 als ebene und in radialer Richtung der Bohrung 20 als gebogene Fläche ausgebildet, wobei der gebogene Flächenverlauf dem Verlauf der Mantelflächen 13 der Wulst 11 nachempfunden ist. Die Unterseite 31 erstreckt sich also quer zur Längsachse entlang einer Geraden und ist in radialer Richtung der Bohrung 20 gebogen. Anders ausgedrückt ist die Unterseite 31 in einer Dimension gerade und in der anderen Dimension gekrümmt ausgebildet.

Der Vorsprung ist von einer Wulst 11 des Laboranalogs 1 in Einführrichtung derart hintergreifbar, dass die Mantelfläche 13 der Wulst 11 (vgl. Fig. 8) nur in einem geringen Bereich, beispielsweise entlang einer geraden Linie, an der Unterseite 31 des Vorsprungs 27 zur Anlage kommt.

Es versteht sich, dass die eben beschriebene Ausgestaltung des Vorsprungs 27 auch bei der ersten Ausführungsform des Printmodells 18 gemäß Fig. 3 verwendet werden kann. Ebenso versteht sich, dass die in Zusammenhang mit der ersten Ausführungsform gemäß Fig. 3 beschriebene Ausgestaltung des Vorsprungs 27 in der zweiten Ausführungsform des Printmodells 18 gemäß Fig. 9 eingesetzt werden kann.

Im Rahmen der Erfindung wurde erkannt, dass die Reibung beim Einsetzen des Laboranalogs in die Kavität auch durch die Größe des Bereichs bestimmt wird, in dem die Mantelfläche 13 der Wulst 11 an der Unterseite des Vorsprungs 27 anliegt. Je geringer dieser Bereich ist, desto weniger Reibung entsteht beim Einsetzen des Laboranalogs. Kommt die Mantelfläche entlang einer Linie an der Unterseite 31 des Vorsprungs 27 zur Anlage so ist die Reibung geringer als wenn die Mantelfläche annähernd vollflächig am Vorsprung 27 zur Anlage kommt.

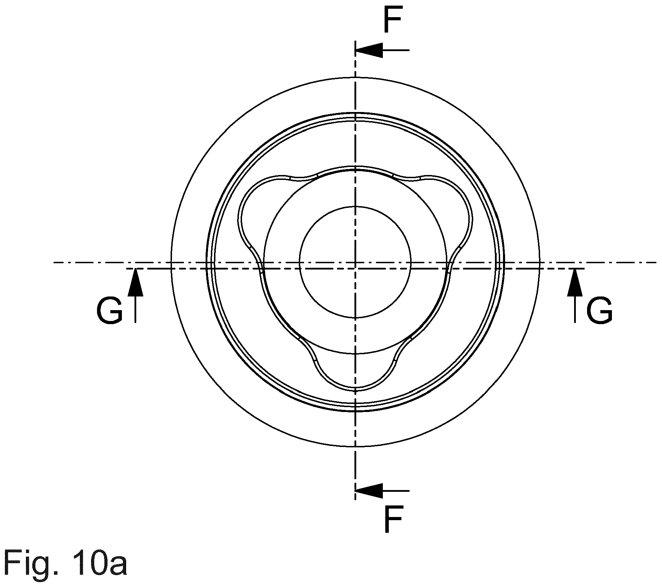

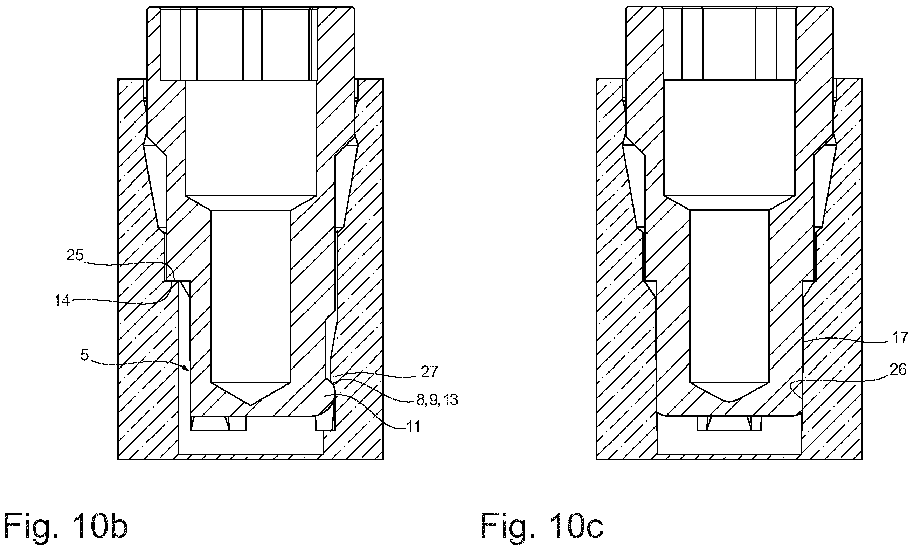

In den Fig. 10a bis 10c ist eine zweite Ausführungsform des Systems 22 dargestellt, das das Laboranalog 1 und das Printmodell 18 mit der Bohrung 20 umfasst. Die Schnittbilder der Figuren 10b und 10c sind um 90° zueinander gedreht, wobei die Schnittebene in Fig. 10c außermittig verläuft.

Im Unterschied zu der Ausführungsform des Systems 22 gemäß den Fig. 4a bis 6b zentrieren nun drei Zentrierelemente 8 im Bereich des apikalen Endes des zweiten Zentrierabschnitts 5 das Laboranalog 1 in der Bohrung 20. Die Zentrierelemente 8 sind als Mantelflächen 13 der Wülste 11 ausgebildet.

Die zweite Ausführungsform des Systems 22 unterscheidet sich weiter dadurch, dass drei Wülste 11 die Vorsprünge 27 der Bohrung 20 hintergreifen, so dass drei Absätze 14 des Laboranalogs 1 an drei Schultern 25 der Bohrung 20 zur Anlage kommen. Dadurch wird das Laboranalog 1 in der Bohrung 20 in Längsrichtung verspannt.

Ein weiterer Unterschied besteht darin, dass nun statt zweier drei Fixierflächen 17 des Laboranalogs 1 an sechs Anlageflächen 26 der Bohrung 20 anliegen. Dadurch wird die rotatorische Fixierung des Laboranalogs 1 in der Bohrung 20 gewährleistet. Auftretende rotatorische Kräfte werden hier auf sechs Anlageflächen 26 verteilt.

## Patentansprüche

1. Laboranalog zum Einsetzen in eine Kavität (19) eines Printmodells (18) und zur Aufnahme eines Abutments, umfassend,
einen im Wesentlichen zylindrischen Grundkörper (2), der entlang einer Längsachse (3) verläuft,
einen ersten Zentrierabschnitt (4) zum Zentrieren des Laboranalogs (1) in der Kavität (19) des Printmodells (18), der in koronaler Richtung an den Grundkörper (2) angrenzt,
einen zweiten Zentrierabschnitt (5) zum Zentrieren des Laboranalogs (1) in der Kavität (19) des Printmodells (18), der in apikaler Richtung an den Grundkörper (2) angrenzt,
Verspannungselemente (10) zum Verspannen des Laboranalogs (1) in Längsrichtung und
wenigstens ein Fixierungselement (16) zur rotatorischen Fixierung des Laboranalogs (1),
wobei der erste Zentrierabschnitt (4) eine Zentrierfläche (7) und der zweite Zentrierabschnitt (5) mindestens ein Zentrierelement (8) aufweisen, die beide geeignet und ausgebildet sind, die Kavität (19) beim Einsetzen des Laboranalogs (1) radial zu weiten,
wobei ein erstes Verspannungselement (10) als Wulst (11) und ein zweites Verspannungselement (10) als Absatz (14) ausgebildet ist,
wobei die Wulst (11) bei eingesetztem Laboranalog (1) ausgebildet ist, einen Vorsprung (27) in der Kavität (19) in Einsetzrichtung derart zu hintergreifen, dass der Absatz (14) an einer Schulter (25) in der Kavität (19) zur Anlage kommt und,
wobei das Fixierungselement (16) flächig ausgebildet ist und bei eingesetztem Laboranalog (1) am Printmodell (18) anliegt,
**dadurch gekennzeichnet, dass**
die Wulst (11) eine in Einsetzrichtung gerundete Mantelfläche (13) mit einem koronalen Bereich (13a) und einen daran angrenzenden apikalen Bereich (13b) hat und
die Mantelfläche (13) in einem Querschnitt entlang der Längsachse des Grundkörpers asymmetrisch verläuft,
wobei die Mantelfläche (13) im besagten Querschnitt entlang des koronalen Bereichs (13a) einen anderen Radius aufweist als entlang des apikalen Bereichs (13b).

2. Laboranalog nach Anspruch 1, **dadurch gekennzeichnet, dass** die Mantelfläche (13) entlang des koronalen Bereichs (13a) einen kleineren Radius aufweist als entlang des apikalen Bereichs (13b).

3. Laboranalog nach einem der vorhergehenden Ansprüche, **dadurch gekennzeichnet, dass** der erste Zentrierabschnitt (4) eine Zentrierfase (6) aufweist, an die in koronaler Richtung die koronale Zentrierfläche (7) angrenzt, wobei der erste Zentrierabschnitt (4) einen im Vergleich zum Grundkörper (2) größeren Durchmesser aufweist.

4. Laboranalog nach einem der vorhergehenden Ansprüche, **dadurch gekennzeichnet, dass** die mindestens eine Wulst (11) am apikalen Ende (12) des zweiten Zentrierabschnitts (5) angeordnet ist und zumindest teilweise in Umfangsrichtung des Grundkörpers (2) verläuft.

5. Laboranalog nach einem der vorhergehenden Ansprüche, **dadurch gekennzeichnet, dass** der mindestens eine Absatz (14) am apikalen Ende (15) des Grundkörpers (2) angeordnet ist.

6. Laboranalog nach einem der vorhergehenden Ansprüche, **dadurch gekennzeichnet, dass** das Laboranalog (1) zwei einander gegenüberliegende oder drei in Umfangsrichtung des Grundkörpers (2) angeordnete Zentrierelemente (8) aufweist, die als apikale Zentrierflächen (9) ausgebildet sind.

7. Laboranalog nach einem der vorhergehenden Ansprüche, **gekennzeichnet durch** vier Verspannungselemente (10), wobei zwei Verspannungselemente (10) als Wülste (11) und zwei Verspannungselemente (10) als Absätze (14) ausgebildet sind, wobei die Wülste (11) und die Absätze (14) jeweils einander gegenüberliegend angeordnet sind.

8. Laboranalog nach Anspruch 7, **dadurch gekennzeichnet, dass** die Absätze (14) und die Wülste (11) in Umfangsrichtung des Grundkörpers (2) um 90° zueinander versetzt angeordnet sind.

9. Laboranalog nach einem der Ansprüche 1 bis 6 **gekennzeichnet durch** sechs Verspannungselemente (10), wobei drei Verspannungselemente (10) als Wulst (11) und drei Verspannungselemente (10) als Absatz (14) ausgebildet sind, wobei die Wülste (11) und die Absätze (14) jeweils gleichmäßig in Umfangsrichtung des Grundkörpers (2) verteilt angeordnet sind.

10. Laboranalog nach den Ansprüchen 6 und 7 oder 6 und 9, **dadurch gekennzeichnet, dass** die apikalen Zentrierflächen (9) als Mantelflächen (13) der Wülste (11) ausgebildet sind.

11. Laboranalog nach einem der vorhergehenden Ansprüche, **dadurch gekennzeichnet, dass** die Fixierungselemente (16) zwei zueinander parallele oder drei in Umfangsrichtung des Grundkörpers (2) angeordnete apikale Fixierflächen (17) aufweisen, die jeweils parallel zur Längsachse des Grundkörpers (2) angeordnet sind und die Wülste (11) umfangsseitig begrenzen.

12. System umfassend ein Laboranalog (1) nach einem der Ansprüche 1 bis 11 und ein Printmodell (18) mit einer im Wesentlichen als Bohrung (20) ausgebildeten Kavität (19) zur Aufnahme des Laboranalogs (1), wobei die Bohrung (20) eine Innenwandung (21) umfasst, das Printmodell mit
einem Einführabschnitt (22) zum Einführen des Laboranalogs (1), der sich ausgehend von einer koronalen Öffnung (23) der Bohrung (20) apikal erstreckt,
einer radialen Verjüngung (24) zur Zentrierung des Laboranalogs (1), die im Einführabschnitt (22) angeordnet ist,
einer Schulter (25) zur Begrenzung der Einführtiefe des Laboranalogs (1), die in Längsrichtung der Bohrung (20) an den Einführabschnitt (22) angrenzt,
mindestens einer Anlagefläche (26) zur rotatorischen Fixierung des Laboranalogs (1), die sich ausgehend von der Schulter (25) in apikale Richtung erstreckt und,
einem Vorsprung (27), der die Bohrung (20) radial verjüngt und von einer Wulst (11) des Laboranalogs (1) in Einführrichtung derart hintergreifbar ist, dass ein Absatz (14) des Laboranalogs (1) an der Schulter (25) zur Anlage kommt.

13. System nach Anspruch 12, **dadurch gekennzeichnet, dass** die radiale Verjüngung (24) im Einführabschnitt (22) des Printmodells (18) umlaufend angeordnet ist.

14. System nach Anspruch 12 oder 13, **gekennzeichnet durch** vier, sechs oder mehr als sechs Anlageflächen (26) des Printmodells (18), von denen zumindest einige parallel zueinander angeordnet sind und sich bis zum Vorsprung (27) erstrecken.

15. System nach einem der Ansprüche 12 bis 14, **dadurch gekennzeichnet, dass** jeweils zwei der Anlageflächen (26) des Printmodells (18) in einer Ebene angeordnet sind, bevorzugt parallel zur Längsrichtung der Bohrung (20).

## Claims

1. Lab analog for insertion into a cavity (19) of a printed model (18) and for accommodating an abutment, comprising
an essentially cylindrical base body (2) that extends along a longitudinal axis (3),
a first centering section (4) for centering the lab analog (1) in the cavity (19) of the printed model (18), the first centering section (4) adjoining the base body (2) in the coronal direction,
a second centering section (5) for centering the lab analog (1) in the cavity (19) of the printed model (18), the second centering section (5) adjoining the base body (2) in the apical direction,
restraining elements (10) for restraining the lab analog (1) in the longitudinal direction, and
at least one fixing element (16) for fixing the lab analog (1) against rotation,
wherein the first centering section (4) is provided with a centering surface (7) and the second centering section (5) is provided with at least one centering element (8) which are both suitable for and configured to widen the cavity (19) radially upon insertion of the lab analog (1),
wherein a first restraining element (10) is configured as a bead (11) and a second restraining element (10) is configured as a step (14),
wherein, when the lab analog (1) is being inserted in the cavity, the bead (11) is configured to engage behind a projection (27) in the cavity (19) in the insertion direction in such a manner that the step (14) becomes seated against a shoulder (25) in the cavity (19),
wherein the fixing element (16) is flat in configuration and rests against the printed model (18) when the lab analog (1) is being inserted in the cavity,
**characterized in that**
the bead (11) has a lateral surface (13) rounded in the insertion direction with a coronal region (13a) and an adjoining apical region (13b), and
the lateral surface (13) is asymmetrical in a cross-section along the longitudinal axis of the base body,
wherein the lateral surface (13) in said cross-section has a different radius along the coronal region (13a) than along the apical region (13b).

2. Lab analog according to claim 1, **characterized in that** the lateral surface (13) has a smaller radius along the coronal region (13a) than along the apical region (13b).

3. Lab analog according to any one of the preceding claims, **characterized in that** the first centering section (4) is provided with a centering chamfer (6) which adjoins the coronal centering surface (7) in the coronal direction, wherein the first centering section (4) has a larger diameter compared with the base body (2).

4. Lab analog according to any one of the preceding claims, **characterized in that** the at least one bead (11) is disposed at the apical end (12) of the second centering section (5) and runs at least partially in the circumferential direction of the base body (2).

5. Lab analog according to any one of the preceding claims, **characterized in that** the at least one step (14) is disposed at the apical end (15) of the base body (2).

6. Lab analog according to any one of the preceding claims, **characterized in that** the lab analog (1) is provided with two mutually opposite centering elements (8) or three centering elements (8) disposed in the circumferential direction of the base body (2), which are configured as apical centering surfaces (9).

7. Lab analog according to any one of the preceding claims, **characterized by** four restraining elements (10), wherein two restraining elements (10) are configured as beads (11) and two restraining elements (10) are configured as steps (14), wherein the beads (11) and the steps (14) are respectively disposed opposite each other.

8. Lab analog according to claim 7, **characterized in that** the steps (14) and the beads (11) are offset by 90° to each other in the circumferential direction of the base body (2).

9. Lab analog according to any one of claims 1 to 6, **characterized by** six restraining elements (10), wherein three restraining elements (10) are configured as beads (11) and three restraining elements (10) are configured as steps (14), wherein the beads (11) and the steps (14) are respectively uniformly distributed in the circumferential direction of the base body (2).

10. Lab analog according to claims 6 and 7 or 6 and 9, **characterized in that** the apical centering surfaces (9) are configured as lateral surfaces (13) of the beads (11).

11. Lab analog according to any one of the preceding claims, **characterized in that** the fixing elements (16) comprise two mutually parallel apical fixing surfaces (17) or three apical fixing surfaces (17) disposed in the circumferential direction of the base body (2), which are respectively disposed parallel to the longitudinal axis of the base body (2) and which confine the beads (11) on the circumferential side.

12. System comprising a lab analog (1) according to any one of claims 1 to 11 and a printed model (18) with a cavity (19) essentially configured as a bore (20) for accommodating the lab analog (1), wherein the bore (20) comprises an inner wall (21), the printed model (18) having
an introduction section (22) for introducing the lab analog (1), the introduction section (22) extending apically from a coronal opening (23) of the bore (20),
a radial tapering (24) for centering the lab analog (1), the radial tapering (24) being disposed in the introduction section (22),
a shoulder (25) to limit the depth to which the lab analog (1) is introduced, the shoulder (25) adjoining the introduction section (22) in the longitudinal direction of the bore (20),
at least one seating surface (26) for fixing the lab analog (1) against rotation, the seating surface (26) extending in the apical direction from the shoulder (25), and
a projection (27), which tapers the bore (20) radially and behind which a bead (11) of the lab analog (1) can engage in the introduction direction in such a manner that a step (14) of the lab analog (1) becomes seated at the shoulder (25).

13. System according to claim 12, **characterized in that** the radial tapering (24) is circumferentially disposed in the introduction section (22) of the printed model (18).

14. System according to claim 12 or 13, **characterized by** four, six or more than six seating surfaces (26) of the printed model (18) at least some of which are parallel to each other and which extend up to the projection (27).

15. System according to anyone of claims 12 to 14, **characterized in that** two of the seating surfaces (26) of the printed model (18) are disposed in one plane, preferably parallel to the longitudinal direction of the bore (20).

## Revendications

1. Analogue de laboratoire destiné à être inséré dans une cavité (19) d'un modèle d'impression (18) et à la réception d'un pilier, comportant
un corps de base (2) essentiellement cylindrique, lequel s'étend le long d'un axe longitudinal (3),
une première section de centrage (4) pour le centrage de l'analogue de laboratoire (1) dans la cavité (19) du modèle d'impression (18), laquelle est adjacente au corps de base (2) dans la direction coronale,
une deuxième section de centrage (5) pour le centrage de l'analogue de laboratoire (1) dans la cavité (19) du modèle d'impression (18), laquelle est adjacente au corps de base (2) dans la direction apicale,
des éléments d'assujettissement (10) pour l'assujettissement de l'analogue de laboratoire (1) dans la direction longitudinale et
au moins un élément de fixation (16) pour la fixation en rotation de l'analogue de laboratoire (1),
dans lequel la première section de centrage (4) comprend une surface de centrage (7) et la deuxième section de centrage (5) comprend au moins un élément de centrage (8), lesquels sont tous deux appropriés et conçus pour élargir radialement la cavité (19) lors de l'insertion de l'analogue de laboratoire (1),
dans lequel un premier élément d'assujettissement (10) se présente sous forme de bourrelet (11) et un deuxième élément d'assujettissement (10) se présente sous forme de palier (14),
dans lequel le bourrelet (11), lorsque l'analogue de laboratoire (1) est inséré, est conçu pour venir se plaquer sur l'arrière d'une saillie (27) dans la cavité (19) dans la direction d'insertion de telle sorte que le palier (14) vienne en appui sur un épaulement (25) dans la cavité (19) et,
dans lequel l'élément de fixation (16) est de forme plate et, lorsque l'analogue de laboratoire (1) est inséré, repose sur le modèle d'impression (18),
**caractérisé en ce que**
le bourrelet (11) a une surface d'enveloppe (13) arrondie dans la direction d'insertion avec une zone coronale (13a) et une zone apicale (13b) adjacente à celle-ci et
la surface d'enveloppe (13) s'étend asymétriquement dans une section transversale le long de l'axe longitudinal du corps de base,
dans lequel la surface d'enveloppe (13) dans ladite section transversale présente un rayon le long de la zone coronale (13a) autre que le long de la zone apicale (13b).

2. Analogue de laboratoire selon la revendication 1, **caractérisé en ce que** la surface d'enveloppe (13) présente un rayon le long de la zone coronale (13a) plus petit que le long de la zone apicale (13b).

3. Analogue de laboratoire selon l'une des revendications précédentes, **caractérisé en ce que** la première section de centrage (4) comprend un biseau de centrage (6) auquel la surface de centrage coronale (7) est adjacente dans la direction coronale, dans lequel la première section de centrage (4) présente un diamètre plus grand en comparaison avec le corps de base (2).

4. Analogue de laboratoire selon l'une des revendications précédentes, **caractérisé en ce que** l'au moins un bourrelet (11) est disposé à l'extrémité apicale (12) de la deuxième section de centrage (5) et s'étend au moins en partie dans la direction périphérique du corps de base (2).

5. Analogue de laboratoire selon l'une des revendications précédentes, **caractérisé en ce que** l'au moins un palier (14) est disposé à l'extrémité apicale (15) du corps de base (2).

6. Analogue de laboratoire selon l'une des revendications précédentes, **caractérisé en ce que** l'analogue de laboratoire (1) comprend deux éléments de centrage (8) opposés l'un à l'autre ou trois éléments de centrage (8) disposés dans la direction périphérique du corps de base (2), lesquels se présentent sous forme de surfaces de centrage apicales (9).

7. Analogue de laboratoire selon l'une des revendications précédentes, **caractérisé par** quatre éléments d'assujettissement (10), dans lequel deux éléments d'assujettissement (10) se présentent sous forme de bourrelets (11) et deux éléments d'assujettissement (10) se présentent sous forme de paliers (14), dans lequel les bourrelets (11) et les paliers (14) sont disposés respectivement à l'opposé les uns des autres.

8. Analogue de laboratoire selon la revendication 7, **caractérisé en ce que** les paliers (14) et les bourrelets (11) sont disposés en décalage mutuel de 90° dans la direction périphérique du corps de base (2).

9. Analogue de laboratoire selon l'une des revendications 1 à 6, **caractérisé par** six éléments d'assujettissement (10), dans lequel trois éléments d'assujettissement (10) se présentent sous forme de bourrelet (11) et trois éléments d'assujettissement (10) se présentent sous forme de palier (14), dans lequel les bourrelets (11) et les paliers (14) sont disposés respectivement de manière répartie régulièrement dans la direction périphérique du corps de base (2).

10. Analogue de laboratoire selon les revendications 6 et 7 ou 6 et 9, **caractérisé en ce que** les surfaces de centrage apicales (9) se présentent sous forme de surfaces d'enveloppe (13) des bourrelets (11).

11. Analogue de laboratoire selon l'une des revendications précédentes, **caractérisé en ce que** les éléments de fixation (16) comprennent deux surfaces de fixation apicales (17) parallèles l'une à l'autre ou trois surfaces de fixation apicales (17) disposées dans la direction périphérique du corps de base (2), lesquelles respectivement sont disposées parallèlement à l'axe longitudinal du corps de base (2) et délimitent les bourrelets (11) sur la périphérie.

12. Système comportant un analogue de laboratoire (1) selon l'une des revendications 1 à 11 et un modèle d'impression (18) avec une cavité (19) se présentant essentiellement sous forme de trou (20) pour la réception de l'analogue de laboratoire (1), dans lequel le trou (20) comporte une paroi interne (21), le modèle d'impression avec
une section d'introduction (22) pour l'introduction de l'analogue de laboratoire (1), laquelle s'étend de manière apicale à partir d'une ouverture coronale (23) du trou (20),
un rétrécissement radial (24) pour le centrage de l'analogue de laboratoire (1), lequel est disposé dans la section d'introduction (22),
un épaulement (25) pour la délimitation de la profondeur d'introduction de l'analogue de laboratoire (1), lequel est adjacent à la section d'introduction (22) dans la direction longitudinale du trou (20),
au moins une surface d'appui (26) pour la fixation en rotation de l'analogue de laboratoire (1), laquelle s'étend dans la direction apicale à partir de l'épaulement (25) et,
une saillie (27), laquelle rétrécit radialement le trou (20) et sur l'arrière de laquelle peut venir se plaquer un bourrelet (11) de l'analogue de laboratoire (1) dans la direction d'introduction de telle sorte qu'un palier (14) de l'analogue de laboratoire (1) vienne en appui sur l'épaulement (25).

13. Système selon la revendication 12, **caractérisé en ce que** le rétrécissement radial (24) est disposé rotatif dans la section d'introduction (22) du modèle d'impression (18).

14. Système selon la revendication 12 ou la revendication 13, **caractérisé par** quatre, six ou plus de six surfaces d'appui (26) du modèle d'impression (18), dont au moins certaines sont disposées parallèlement les unes aux autres et s'étendent jusqu'à la saillie (27).

15. Système selon l'une des revendications 12 à 14, **caractérisé en ce que** respectivement deux des surfaces d'appui (26) du modèle d'impression (18) sont disposées dans un plan, de préférence parallèlement à la direction longitudinale du trou (20).
